## Europäisches Patentamt

## European Patent Office

## Office européen des brevets

(19)

(11) Veröffentlichungsnummer: **0 151 743**
**B1**

(12)

# EUROPÄISCHE PATENTSCHRIFT

(45) Veröffentlichungstag der Patentschrift: **04.04.90**

(51) Int. Cl.⁵: **G 02 B 6/44**

(21) Anmeldenummer: **84115155.8**

(22) Anmeldetag: **11.12.84**

(54) Optisches Übertragungselement.

(30) Priorität: **10.01.84 DE 3400605**

(43) Veröffentlichungstag der Anmeldung:
**21.08.85 Patentblatt 85/34**

(45) Bekanntmachung des Hinweises auf die
Patenterteilung:
**04.04.90 Patentblatt 90/14**

(84) Benannte Vertragsstaaten:
**AT BE CH DE FR GB IT LI NL SE**

(56) Entgegenhaltungen:
**EP-A-0 091 253       DE-A-3 108 109**
**DE-A-2 533 144       DE-A-3 147 137**
**DE-A-2 741 153       DE-A-3 214 603**
**DE-A-3 011 009       DE-U-8 122 786**

**ECOC 83 - 9th European Conference on Optical
Communication, H. Melchior and A. Sollberge
(Editors) - Elsevier Science Publishers B.V.
(North Holland), 1983, Seiten 22**

(73) Patentinhaber: **Siemens Aktiengesellschaft
Wittelsbacherplatz 2
D-8000 München 2 (DE)**

(72) Erfinder: **Oestreich, Ulrich, Dipl.-Ing.,
Karl-Witthalm-Strasse 15
D-8000 München 70 (DE)**
Erfinder: **Mayr, Ernst, Ing.,
Wernbergstrasse 5
D-8130 Starnberg (DE)**

## Beschreibung

Die Erfindung betrifft ein optisches Übertragungselement mit einem mit einer Polsterschicht versehenen faserförmigen Lichtwellenleiter, der im Inneren eine Hülle aus hartem Material untergebracht ist, wobei zwischen der Hülle und der Polsterschicht eine Gleitschicht vorgesehen ist.

Aus der DE—OS—30 11 009 ist ein optisches Übertragungselement bekannt, das einen faserförmigen Lichtwellenleiter enthält, auf dem eine Polsterschicht aufgebracht ist. Diese Anordnung ist von einer relativ steifen Schutzhülle umgeben. Zwischen der Polsterschicht und der steifen Schutzschicht ist eine Trennschicht vorgesehen, welche Bewegungsvorgänge zwischen dem Lichtwellenleiter samt Polsterschicht einerseits und der äusseren Schutzhülle andererseits zuläßt.

Aus dem Artikel "A new zero linear expansion coefficient tight jacket optical fibre" von S. Yamakawa et al—ECOC 83—9th European Conference on Optical Communication—H. Melchior and A. Sollberger (editors)—Elseirer Science Publishers (North-Holland) 1983, Seiten 227—230 ist ein fest beschichteter Lichtwellenleiter ("Vollader") bekannt, dessen Hülle idealerweise einen hohen E-modul sowie einen extrem niedrigen Ausdehnungskoeffizienten aufweisen soll. Unter Anwendung eines "thermotropic liquid crystal polyester polymer" als Hüllenmaterial wird ein E-modul von 9 GPa bzw. 7 GPa (d.h. 9000 N/mm² bzw. 7000 N/mm²) sowie einen Ausdehnungskoeffizienten von $2 \times 10^{-6}/°C$, bzw. $1 \times 10^{-5}/°C$ erreicht. Außerdem ist angegeben, daß mit dem speziellen vorgeschlagenen Polyester der Wert des Ausdehnungskoeffizienten der Hülle bei einer zunehmenden "shear rate" abnimmt.

Aus der EP—A—0 091 253 ist ein lose in einer Schutzhülle untergebrachte Lichtwellenleiter ("Hohlader") bekannt, dessen Hülle einen E-Modul von $4—20 \times 10^6$ psi (d.h. 27 600—138 000 N/mm²) sowie einen Ausdehnungskoeffizienten von $-10 \times 10^{-6}$ bis $-4 \times 10^{-6}/°F$ (d.h. von $-18 \times 10^{-6}$ bis $-7,2 \times 10^{-6}/°K$) aufweist. Der Ausdehnungskoeffizient ist demzufolge negativ.

In der DE—A—3 108 109 ist eine "Vollader" offenbart, deren Hülle aus einer matrixartigen Einbettung einzelner in Längsrichtung des LWL verlaufender endloser Fasern aus aromatischem Polyamid in einem geeigneten aushärtbarem Werkstoff besteht. Der resultierende Ausdehnungskoeffizienten liegt unter $5 \times 10^{-6}/°K$, wobei ein hoher E-modul erreicht wird.

Durch die DE—A—3 147 137 ist eine "Hohlader" offenbart, bei der langsame Ausgleichsbewegungen des LWL wegen der meßbaren Viskosität der Beschichtungs möglich sind. Die Hülle weist einen E-Modul von bis zu 3000 N/mm² auf sowie einen geringen Ausdehnungskoeffizienten, da sie aus Polyester besteht.

Durch die DE—A—2 741 153 ist eine "Hohlader" offenbart, deren Hülle aus Polykarbonat besteht.

Für einen wirkungsvollen Schutz des Lichtwellenleiters gegen unerwünschte mechanische Beanspruchungen, insbesondere zum Beispiel im Zusammenhang mit Verarbeitungsvorgängen bei der Verseilung oder dergleichen, besteht die Aufgabe, die harte Schutzhülle entsprechend zu demensionieren, um den bestmöglichen Schutz der empfindlichen Lichtwellenleiterfaser zu gewährleisten. Diese Aufgabe wird gemäß der Erfindung, welche sich auf ein optisches Übertragungselement der eingangs genannten Art bezieht, dadurch erreicht, daß die Hülle einen E-Modul größer als 2000 N/mm² aufweist, daß der Wärme-Ausdehnungskoeffizient der Hülle unter $0,8 \cdot 10^{-4}/°K$ gewählt ist, vorzugsweise zwischen $0,5 \cdot 10^{-4}/°K$ und $0,7 \cdot 10^{-4}/°K$, und daß die Hülle aus spannungsrißempfindlichem Material besteht, wobei ihre Außenfläche mit einer fest haftenden Schutzschicht versehen ist, die im Vergleich zur Spannungsrißempfindlichkeit der Hülle nicht oder nur sehr wenig spannungsrißempfindliche ist.

Die Anwendung von E-Modul-Werten größer als 2000 N/mm² hat den Vorteil, daß die Steifigkeit der Hülle ausreichend groß ist. Weiterhin wird dadurch erreicht, daß Deformationen der Hülle durch örtliche Querkräfte ($E \cdot A \cdot \approx 1000$ N) gering bleiben und die $E \cdot A$-Werte in Längs- und Querrichtung von Glasfasern ($\approx 125$ μm Durchmesser) und Hülle etwa gleichgroß sind, was einerseits eine Aufteilung aller Kräfte etwa 1:1 bewirkt, andererseits den größeren Ausdehnungskoeffizienten der Hülle nicht zu für die Faser schädlichen Deformationen führen läßt.

Die Anwendung von Ausdehnungskoeffizienten unter $0,8 \cdot 10^{-4}/°K$ ist deshalb zweckmäßig, weil damit der Unterschied in den Ausdehnungskoeffizienten zwischen Faser und Hülle auf etwa eine Größenordnung beschränkt bleibt. Bei $\pm 50°K$ Temperaturabweichung können (mit $\varepsilon$=relative Dehnung, A=Querschnittsfläche) nach der Gleichung

$$\frac{\varepsilon \cdot E \cdot A}{2}$$

maximale Kräft von

$$\frac{50 \cdot 8 \cdot 10^{-5} \cdot 1000}{2} \approx 2 \text{ N}$$

auf Hülle und Faser wirken, die mechanisch wie optisch noch erträglich anzusehen sind.

Da die dünne Gleitschicht ebenfalls einen Temperaturgang hat, weist sie bei teifen Temperaturen genügend Stützwirkung für die Faser auf, um bei einer Stauchkraft in dieser Größe noch kein Ausknicken zuzulassen.

Das gemäß Erfindung aufgebaute Übertragungselement bietet für den Lichtwellenleiter einen Schutz, der dem eines lose im Inneren einer rohrförmigen Hülle angebrachten Lichtwellenleiters ("Hohlader") nahekommt. Ein derart aufgebautes Element kann somit in besonders vorteilhafter Weise zusammen mit anderen ähnlich auf gebauten Übertragungselementen zu einem Bündel verseilt werden und zwar auch in dicht gepachtem Seelenaufbau. Dies könnte nicht erreicht werden, wenn nicht eine entsprechende Dimensionierung an der Hülle vorgesehen wäre und nicht infolge der Wirkung der Gleitschicht eine starke mechanische Entkopplung zwischen Außenhülle und dem im Inneren liegenden gepolsterten Lichtwellenleiter vorhanden wäre.

Auch die Auslegung der Gleitschicht ist in diesem Zusammenhang von besonderer Bedeutung, wobei vorzugsweise vernetzte oder thixotrope Füllmassen verwendet werden, die aber in vorteilhafter Weise noch in einem gewissen Umfang eine tragende Wirkung haben sollten. Dabei sind E-Modulwerte für die Gleitschicht unter $0,01$ N/mm$^2$ zweckmäßig, wobei Werte zwischen $0,01$ N/mm$^2$ und $0,001$ N/mm$^2$ besonders zweckmäßig sind.

Es gelten vorteilhaft etwa folgende E-Modul-Werte für die einzelnen Bestandteile:

| | |
|---|---|
| E-Modul-LWL-Glas | 78000 N/m$^2$ |
| E-Modul-Polsterschicht (Coating) | 10 N/mm$^2$ |
| E-Modul-Gleitschicht (Füllmasse) | 0,01 N/mm$^2$ |
| E-Modul-Hülle | 2000 N/mm$^2$ |

Die Dicke der Gleitschicht wird vorteilhaft zwischen 50 und 100 µm gewählt, wobei stets sichergestellt sein muß, daß zwischen derharten Hülle einerseits und der gepolsterten Lichtwellenleiterfaser andererseits infolge der Gleitschicht Ausgleichsvorgänge möglich bleiben. Es dürfen also Bewegungsvorgänge der Hülle nicht bis zu den Lichtwellenleitern durchdringen, sondern müssen von der Gleitschicht abgefangen werden.

Für die Querschnitte ist zweckmäßig etwa anzusetzen:

| | |
|---|---|
| Lichtwellenleiter-Faser | 1/80 mm$^2$ |
| Polsterschicht (Coating) | 0,2 mm$^2$ |
| Gleitschicht (Füllmasse) | 0,2 mm$^2$ |
| Hülle | 0,3—0,4 mm$^2$ |

Daraus ergibt sich für $E \cdot A$

| | |
|---|---|
| Lichtwellenleiter-Faser: | 1000 N |
| Polsterschicht (Coating): | 2 N |
| Gleitschicht (Füllmasse): | 0,02 N |
| Hülle | 600—1500 N |

Es ist zweckmäßig, wenn die Polsterschicht auf UV-vernetztem Material besteht, weil damit hohe Geschwindigkeiten beim Beschichten der frische gezogenen Faser möglich werden und außerdem mit Hilfe einfacher Quellmittel, gegebenenfalls auch nur mechanisch ein Entfernen der Polsterschicht möglich ist (Silikon-Gummi als Alternative haftet sehr fest an der Faser).

Die nach außen folgende Hülle soll relative steif gebaut sein und es kommen hierfür vor allem Stoffe, (insbesonders Spritzgußstoffe) in Frage, die hart sind. Hierfür geeignete Stoffe, zum Beispiel bestimmte Polykarbonate haben aber wegen ihrer großen Härte die nachteilige Eigenschaft, daß sie relativ spannungsrißempfindlich sind. Das bedeutet, daß bei entsprechenden Verformungen, zum Beispiel durch eine Biegespannung feine Risse auftreten können, durch welche zum· Beispiel Wasser nach innen dringen kann.

Die Ursache für dieses Verhalten liegt in den hohen eingefrorenen Orientierungsspannungen, die bei Angriffen auf die Oberfläche und durch ultraviolettes Licht oder durch Lösungsmittel (zum Beispiel aus der Gleitschicht) noch verbreitert bzw. vertieft werden können. Da die verwendeten Stoffe entweder von der Herstellung her oder bewußt zum Einstellen bestimmter Schmelzindizes ein breites Gemisch von Molekulargewichten enthalten, wird mit zunehmender Härte une zunehmendem E-Modul das Spannungsrißverhalten immer kritischer. Der vorliegenden Erfindung liegt deshalb auch noch die Aufgabe zugrunde, sicherzustellen, daß trotz spannungsribempfindlicher Hüllen hieraus keine störenden Auswirkungen erwachsen können. Dies wird dadurch erreicht, daß die Außenfläche der harten Hülle mit einer haftenden Schutzschicht versehen ist, die im Vergleich zur Spannungsrißempfindlichkeit der inneren Hülle nicht oder nur sehr wenig spannungsrißempfindlich ist.

Für die Schutzschicht selbst werden zweckmäßig hochmolekulare Materialien auf Polyester-Basis, insbesondere PBTP, verwendet.

Eine feuchtebremsende und selbst feuchteunabhängige Polyesterschicht als zusätzliche Schutzschicht verhindert dies weitestgehend.

Andererseits wäre die Polyester-Schicht allein auch in größerer Dicke weder hart noch quellmittelbeständig genug (d.h. gegenüber der Gleitschicht), so daß die bevorzugte Kombination zweier Hüllen ein Optimum an Beständigkeit und Schutzwirkung bietet.

Das gemäß der Erfindung aufgebaute Übertragungselement ist besonders vorteilhaft als Einzelader für die Bildung verseilter Aderbündel einsetzbar, weil durch die harte Schutzhülle und durch die zwischenliegende Gleitschicht die bei der Verseilung auftretenden mechanischen Verformungskräfte nicht oder zumindest nicht in störendem Umfang bis zu dem Lichtwellenleiter vordringen können.

Bei Verwendung des Übertragungselementes als Ader für die Seele eines optischen Kabels wird zweckmäßig so vorgegangen, daß das Material der Schutzschicht derart gewählt ist, daß sie von einer etwaigen Seelenfüllmasse nicht oder nicht nennenswert angequollen wird.

Sonstige Weiterbildungen der Erfindung sind in den übrigen Unteransprüchen wiedergegeben.

Die Erfindung wird nachstehend anhand eines Ausführungsbeispiels näher erläutert, das eine Lichtwellenleiterader AD im Querschnitt zeigt. Von innen nach außen besteht dieses Element aus einem Lichtwellenleiter LW, der mit einer polsternden Schutzschicht PS umgeben ist. Für die Polsterschicht PS werden zweckmäßigerweise UV-vernetzbare Materialien verwendet. Die Polsterschicht sitzt unmittelbar auf der Außenhaut des Lichtwellenleiters LW auf. Im Anschluß an die Polsterschicht PS ist eine Gleitschicht GS vorgesehen, die Bewegungsvorgänge zwischen einer harten äußeren Hülle HL und der Polsterschicht PS zuläßt. Es ist zweckmäßig, das die Gleitschicht GS zumindest in gewissem Umfang tragende Eigenschaften aufweist und vorzugsweise aus leicht vernetztem oder thixotropem Material niedriger Grundviskosität besteht. Um jedoch die Entkopplung des Lichtwellenleiters von den Bewegungsvorgängen der Hülle weiterhin sicherzustellen, darf die Gleitschicht GS nur einen sehr geringen E-Modul und zwar vorteilhaft unter 0,01 $N/mm^2$, vorzugsweise zwischen 0,01 und 0,001 $N/mm^2$ aufweisen.

Für die Einzelbestandteile des Übertragungselementes gelten etwa folgende Außendurchmesserwerte:

| Lichtwellenleiter LW | 50—125 µm |
|---|---|
| Polsterschicht PS | 250—500 µm |
| Gleitschicht GS | 400—700 µm |
| Hülle HL | 700—1000 µm |

Um die im Inneren weich und damit beweglich und gepolstert gelagerte Lichtwellenleiterfaser LW gegen mechanische Beanspruchung von außen zu schützen, wird die Hülle HL aus einem entsprechend harten Material gefertigt, wofür insbesondere Spritzgußwerkstoffe wie Polyäthersulfone, Polykarbonate usw. verwendet werden können. Manche derartig harten Materialien haben jedoch den Nachteil, daß bei ihnen in hohem Maße eingefrorene Orientierungsspannungen auftreten, die bei Angriffen auf die Oberfläche zum Beispiel durch ultraviolettes Licht oder Lösungs- oder Netzmittel zum Anreißen desselben führen.

Abhilfe hiergegen läßt sich dadurch schaffen, daß außen eine nicht spannungsrißempfindliche Schutzschicht SU aufgebracht wird, die so elastische ist, daß jede Bildung von Rissen in der Innenschicht (Hülle HL) verhindert wird.

Diese Schutzschicht SU besteht vorteilhaft aus einem hochelastischen Material auf Polyesterbasis, das unmittelbar anschließend an den Extrusionsvorgang für die steife Hülle HL mittels einer Ringdüse aufgetragen werden kann. Die Wandstärke dieser Schutzschicht SU kann relativ gering zwischen 10 und 80 µm gewählt werden und liegt vorteilhaft bei etwa 50 µm Sie sollte zwischen 10 und 50%, vorzugsweise etwa 30% der Wandstärke der Hülle HL betragen. Bereits relativ dünne Wandstärken der Schutzschichten bilden einen ausreichenden Schutz gegen die Folgen von Spannungsrissen bei der steifen Hülle HL. Die Schutzschicht SU wird so auf die Hülle HL aufgebracht, daß sie auf letzterer haftet, damit bei Biegevorgängen kein Abheben der Schichten voneinander möglich wird, was bei scharfem Biegen zum Knicken führen könnte. Die ideale Hüllenkombination hebt außerdem Schwächen der Einzelschichten gegenseitig auf (z.B. Wasserempfindlichkeit und Ölempfindlichkeit).

Die Wandstärke der Gleitschicht GS liegt vorteilhaft zwischen 50 µm und 100 µm, die Wandstärke der Hülle HL zwischen 80 µm und 140 µm, wobei Durchmesserwerte von 700 bis 1100 µm zweckmäßig sind. Die vorgenannten Dimensionierungen sind besonders vorteilhaft bei Lichtwellenleiter-Adern anzuwenden, die zu Bündeln vorseilt werden.

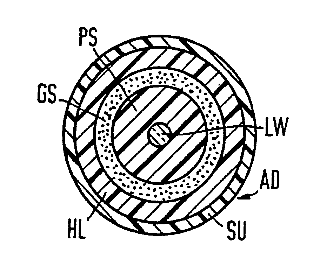

## Patentansprüche

1. Optisches Übertragungselement (AD) mit einem mit einer Polsterschicht (PS) versehenen faserförmigen Lichtwellenleiter (LW), der im Inneren einer Hülle (HL) aus hartem Material untergebracht ist, wobei zwischen der Hülle (HL) und der Polsterschicht (PS) eine Gleitschicht (GS) vorgesehen ist, dadurch gekennzeichnet, daß die Hülle (HL) einen E-Modul größer als 2000 $N/mm^2$ aufweist daß der Wärme-Ausdehnungskoeffizient der Hülle (HL) unter $0,8 \cdot 10^{-4}/°K$ gewählt ist, vorzugsweise zwischen $0,5 \cdot 10^{-4}/°K$ und $0,7 \cdot 10^{-4}/°K$ und daß die Hülle (HL) aus spannungsrißempfindlichem Material besteht, wobei ihre Außenfläche mit einer fest haftenden Schutzschicht (SU) versehen ist, die im Vergleich zur Spannungsrißempfindlichkeit der Hülle (HL) nicht oder nur sehr wenig spannungsrißempfindlich ist.

2. Übertragungselement nach Anspruch 1, dadurch gekennzeichnet, daß die Polsterschicht (PS) UV-vernetzt ist.

3. Übertragungselement nach einem der vorhergehenden Ansprüche, dadurch gekennzeichnet, daß die Hülle (HL) aus Spritzgußmaterial, insbesondere aus Polyäthersulfon oder aus Polykarbonat besteht.

4. Übertragungselement nach einem der vorhergehenden Ansprüche, dadurch gekennzeichnet, daß die Gleitschicht (GS) tragende Eigenschaften aufweist und vorzugsweise aus vernetzbarem oder thixotropem Material besteht.

5. Übertragungselement nach Anspruch 4, dadurch gekennzeichnet, daß die Gleitschicht (GS) einen E-Model unter 0,01 $n/mm^2$, vorzugsweise zwischen 0,01 und 0,001 $N/mm^2$ aufweist.

6. Übertragungselement nach einem der vorhergehenden Ansprüche, dadurch gekennzeichnet, daß die Schutzschicht (SU) aus einem Polyester, insbesondere aus PBTP besteht.

7. Übertragungselement nach einem der vorhergehenden Ansprüche, dadurch gekennzeichnet, daß die Wandstärke der Schutzschicht (SU) zwischen 10% und 50% der Wandstärke der Hülle (HL), vorzugsweise etwa 30% beträgt.

8. Übertragungselement nach einem der vorhergehenden Ansprüche, dadurch gekennzeichnet, daß die Wandstärke der Schutzschicht (SU) zwischen 10 und 80 µm gewählt ist.

9. Übertragungselement nach einem der vorhergehenden Ansprüche, dadurch gekennzeichnet, daß die Schutzschicht (SU) aus einem hochmolekularen Material auf Polyester-Basis besteht.

10. Übertragungselement nach einem der vorhergehenden Ansprüche, gekennzeichnet durch seine Verwendung als Lichtwellenleiter-Ader für den Aufbau verseilter Lichtwellenleiter-Bündel.

11. Übertragungselement nach Anspruch 10, dadurch gekennzeichnet, daß bei einem längsdichten Kabel das Material der Schutzschicht (SU) so gewählt ist, daß sie von der Seelenfüllmasse nicht oder nicht nennenswert angequollen wird.

12. Übertragungselement nach einem der vorhergehenden Ansprüche dadurch gekennzeichnet, daß die Schutzschicht (SU) auf der Außenfläche der Hülle (HL) haftet.

13. Übertragungselement nach einem der vorhergehenden Ansprüche dadurch gekennzeichnet, daß die Wandstärke der Gleitschicht (GS) zwischen 50 und 100 µm gewählt ist.

14. Übertragungselement nach einem der vorhergehenden Ansprüche dadurch gekennzeichnet, daß die Wandstärke der Hülle (HL) zwischen 140 und 80 µm gewählt ist und ihr Durchmesser zwischen 700 und 1100 µm liegt.

## Revendications

1. Elément de transmission optique (AD) comprenant un guide d'ondes optique en forme de fibre (LW), pourvu d'une couche de rembourrage (PS), qui est logé à l'intérieur d'une enveloppe (HL) en matériau dur, avec prévision d'une couche de glissement (GS) entre l'enveloppe (HL) et la couche de rembourrage (PS), caractérisé en ce que l'enveloppe (HL) présente un module d'élasticité longitudinale E supérieur à 2000 N/mm², que l'on a choisi un coefficient de dilatation thermique inférieur à 0,8 $10^{-4}$/°K pour l'enveloppe (HL), de préférence un coéfficient de dilatation compris entre $0,1 \cdot 10^{-4}$/°K et $0,7 \cdot 10^{-4}$/°K, et que l'enveloppe (HL) est faite d'un matériau sensible au fendillement par contrainte et sa surface externe est pourvue d'une couche de protection (SU) qui adhère solidement et n'est pas sensible ou est seulement très peu sensible au fendillement par contrainte comparativement à la sensibilité au fendillement par contrainte de l'enveloppe (HL).

2. Elément selon la revendication 1, caractérisé en ce que la couche de rembourrage (PS) est réticulée aux rayons ultraviolets.

3. Elément selon une des revendications précédentes, caractérisé en ce que l'enveloppe (HL) est faite d'un matériau convenant pour le moulage par injection, en particulier d'un polyéther-sulfone ou d'un polycarbonate.

4. Elément selon une des revendications précédentes, caractérisé en ce que la couche de glissement (GS) possède des propriétés portantes et est faire de préférence d'un matériau réticulable ou thixotrope.

5. Elément selon la revendication 4, caractérisé en ce que la couche de glissement (GS) possède un module d'élasticité longitudinale E inférieur à 0,01 N/mm², de préférence entre 0,01 et 0,001 N/mm².

6. Elément selon une des revendications précédentes, caractérisé en ce que la couche de protection (SU) est faite d'un polyester, notamment de polybutènetéréphtalate.

7. Elément selon une des revendications précédentes, caractérisé en ce que l'épaisseur de paroi de la couche de protection (SU) représente entre 10% et 50%, de préférence environ 30%, de l'épaisseur de paroi de l'enveloppe (HL).

8. Elément selon une des revendications précédentes, caractérisé en ce que l'épaisseur de paroi de la couche de protection (SU) est comprise entre 10 et 80 µm.

9. Elément selon une des revendications précédentes, caractérisé en ce que la couche de protection (SU) est faite d'un matériau à poids moléculaire élevé à base de polyester.

10. Elément selon une des revendications précédentes, caractérisé par son emploi en tant que conducteur guide d'ondes optique pour la réalisation de faisceaux de fibres optiques toronnées.

11. Elément selon la revendication 10, caractérisé en ce que, dans le cas d'un câble étanche longitudinalement, le matériau de la couche de protection (SU) est choisi de manière que cette couche ne soit pas gonflée, ou ne soit pas gonflée de façon notable, par la masse de remplissage de l'âme du câble.

12. Elément selon une des revendications précédentes, caractérisé en ce que la couche de protection (SU) adhère à la surface externe de l'enveloppe (HL).

13. Elément selon une des revendications précédentes, caractérisé en ce que l'épaisseur de paroi de la couche de glissement (GS) est comprise entre 50 et 100 µm.

14. Elément selon une des revendications précédentes, caractérisé en ce que l'épaisseur de paroi de l'enveloppe (HL) est comprise entre 140 et 80 µm et son diamètre est compris entre 700 et 1100 µm.

## Claims

1. Optical transmission element (AD) comprising an optical waveguide (LW) in fibre form which is provided with a cushion layer (PS) and which is accommodated in the interior of a sleeve (HL) of hard material, a slip layer (GS) being provided between the sleeve (HL) and the cushion layer (PS), characterized in that the sleeve (HL) exhibits a modulus of elasticity of greater than 2000 N/mm², in that the coefficient of thermal expansion of the sleeve (HL) is selected to be less than 0.8 ä $10^{-4}$/K, preferably between 0.5 ä $10^{-4}$/K and 0.7 ä $10^{-4}$/K and in that the sleeve (HL) consists of material susceptible to stress cracking, its outer surface being provided with a firmly adhering protective layer (SU) which, in comparison with the susceptibility to stress cracking of the sleeve (HL), has no or only very little susceptibility to stress cracking.

2. Transmission element according to Claim 1, characterized in that the cushion layer (PS) is UV-crosslinked.

3. Transmission element according to one of the preceding claims, characterized in that the sleeve (HL) consists of injection-moulded material, particularly of polyether sulphone or of polycarbonate.

4. Transmission element according to one of the preceding claims, characterized in that the slip layer (GS) exhibits load-bearing characteristics and preferably consists of cross-linkable or thixotropic material.

5. Transmission element according to Claim 4, characterized in that the slip layer (GS) exhibits a modulus of elasticity of less than 0,01 N/mm², preferably between 0.01 and 0.001 N/mm².

6. Transmission element according to one of the preceding claims, characterized in that the protective layer (SU) consists of a polyester, particularly of PBTP.

7. Transmission element according to one of the preceding claims, characterized in that the wall thickness of the protective layer (SU) is between 10% and 50% of the wall thickness of the sleeve (HL) preferably about 30%.

8. Transmission element according to one of the preceding claims, characterized in that the wall thickness of the protective layer (SU) is selected to be between 10 and 80 µm.

9. Transmission element according to one of the preceding claims, characterized in that the protective layer (SU) consists of a polyester-based material with high molecular weight.

10. Transmission element according to one of the preceding claims, characterized by its use as optical waveguide core for the construction of twisted optical waveguide bundles.

11. Transmission element according to Claim 10, characterized in that in a longitudinal sealed cable, the material of the protective layer (SU) is selected in such a manner that the said protective layer is not swollen or not significantly swollen by the filling-composition of the core.

12. Transmission element according to one of the preceding claims, characterized in that the protective layer (SU) adheres to the outer surface of the sleeve (HL).

13. Transmission element according to one of the preceding claims, characterized in that the wall thickness of the slip layer (GS) is selected to be between 50 and 100 µm.

14. Transmission element according to one of the preceding claims, characterized in that the wall thickness of the sleeve (HL) is selected to be between 140 and 80 µm and its diameter is between 700 and 1100 µm.